# EUROPEAN PATENT APPLICATION

(11) **EP 4 741 316 A1**
(43) Date of publication of application: **13.05.2026**
(21) Application number: 24855577.3
(22) Date of filing: 30.07.2024
(51) Int. Cl.: B65G 1/04, B65G 1/137

(54) **LOGISTICS SYSTEM, LOGISTICS SYSTEM CONTROL METHOD, AND STORAGE MEDIUM**

(30) Priority: 21.08.2023 CN 202311060284
(71) Applicant: Hai Robotics Co., Ltd., Shenzhen, Guangdong 518000 (CN)
(72) Inventor: CHEN, Kai, Shenzhen, Guangdong 518000 (CN); LI, Xiaolong, Shenzhen, Guangdong 518000 (CN); YE, Yihua, Shenzhen, Guangdong 518000 (CN); ZHANG, Feiyue, Shenzhen, Guangdong 518000 (CN)
(74) Representative: Nederlandsch Octrooibureau
(86) International application number: PCT/CN2024/108556
(87) International publication number: WO 2025/039851

(57) **Abstract**

This application provides a logistics system, a logistics system control method, and a storage medium. The logistics system provided in this application includes a warehousing apparatus, a picking apparatus, and a carrying apparatus. The warehousing apparatus includes a plurality of racks, there is an aisle between adjacent racks, each rack includes a warehousing layer and a temporary storage layer, the warehousing layer is configured to place a storage container, and the temporary storage layer is configured to place an order container. The picking apparatus includes a retrieving or placing mechanism and a picking mechanism, the retrieving or placing mechanism is configured to retrieve or place any one of the storage container and the order container, and the picking mechanism is configured to pick goods in the storage container at a bearing location into the order container. The rack has a first movement channel for movement of the carrying apparatus, and the carrying apparatus is configured to take out a post-picking order container from the temporary storage layer or place a vacant order container at the temporary storage layer, to improve space utilization and logistics efficiency, and avoid congestion during goods outbound.

## Description

### CROSS-REFERENCES

This application claims priority to Chinese Patent Application No. 202311060284.9, filed with the China National Intellectual Property Administration on August 21, 2023 and entitled "LOGISTICS SYSTEM, LOGISTICS SYSTEM CONTROL METHOD, AND STORAGE MEDIUM", which is incorporated herein by reference in its entirety.

### TECHNICAL FIELD

This application relates to the field of warehousing logistics technologies, and in particular, to a logistics system, a logistics system control method, and a storage medium.

### BACKGROUND OF THE INVENTION

Storage manners of a three-dimensional warehouse are widely applied to the field of warehousing logistics because of a large storage capacity of the three-dimensional warehouse. In addition, with the development of artificial intelligence and automation technologies, the degree of automation of a logistics system is increasingly high. The three-dimensional warehouse can be docked with an external device through an automation apparatus, to automatically retrieve or place goods.

In related technologies, the three-dimensional warehouse usually consists of a plurality of racks, and a robot configured to retrieve or place goods can move between the racks. During goods outbound, the robot usually retrieves a material container loaded with the goods from a corresponding storage location, and transports the material container along a preset track path to a sorting workbench for sorting, and the sorted goods are packed for outbound.

However, a current robot for retrieving or placing goods occupies large space when moving. As a result, space utilization in logistics warehouses is low, and congestion is prone to occur during operation.

### SUMMARY OF THE INVENTION

This application provides a logistics system, a logistics system control method, and a storage medium, to resolve the technical problem that a current robot for retrieving or placing goods occupies large space when moving. As a result, space utilization in logistics warehouses is low, and congestion is prone to occur during operation.

According to a first aspect, this application provides a logistics system. The logistics system includes a warehousing apparatus, a picking apparatus, and a carrying apparatus. The warehousing apparatus includes a plurality of racks disposed at intervals, there is an aisle between adjacent racks, each rack includes at least one warehousing layer and at least one temporary storage layer, the warehousing layer is configured to place a storage container, and the temporary storage layer is configured to place an order container.

The picking apparatus is configured to move along the aisle, the picking apparatus includes a retrieving or placing mechanism and a picking mechanism, the retrieving or placing mechanism is configured to retrieve or place any one of the storage container and the order container, the retrieving or placing mechanism has at least two bearing locations, the at least two bearing locations are respectively configured to bear the storage container and the order container, and the picking mechanism is configured to pick goods in the storage container on the bearing location into the order container. The rack has a first movement channel for movement of the carrying apparatus, and the carrying apparatus is configured to take out a post-picking order container from the temporary storage layer or place a vacant order container at the temporary storage layer.

The logistics system provided in this embodiment of this application performs a retrieving or placing operation with the picking apparatus by setting the picking apparatus and the carrying apparatus to cooperate, and completes a goods picking operation on the picking apparatus upon goods are shipped, thereby improving the outbound efficiency. In addition, the carrying apparatus is used to transport a post-picking order container. In this way, a large picking mechanism does not need to drive out of the aisle, thereby reducing area occupation of space outside the rack, improving space utilization, and avoiding apparatus congestion.

In some embodiments, the warehousing layer and the temporary storage layer are arranged in a height direction of the rack, the temporary storage layer is located at the bottom of the rack, and the first movement channel is located on a side of the temporary storage layer.

In this way, space under the rack can be fully utilized, so that the carrying apparatus does not need to occupy aisle space when moving, thereby improving convenience of an order container entering and exiting from a warehouse.

In some embodiments, the temporary storage layer has a first retrieving or placing opening and a second retrieving or placing opening, the first retrieving or placing opening may face the aisle, and the picking apparatus is configured to retrieve or place the order container from the first retrieving or placing opening; and the second retrieving or placing opening may face the first movement channel, and the carrying apparatus is configured to retrieve or place the order container from the second retrieving or placing opening.

In this way, the carrying apparatus and the picking apparatus can retrieve or place the order container from two ends of the temporary storage layer according to respective tasks, without mutual interference, thereby improving efficiency of order container entry and exit.

In some embodiments, the retrieving or placing mechanism includes a first retrieving or placing mechanism and a second retrieving or placing mechanism, and the first retrieving or placing mechanism and the second retrieving or placing mechanism may be disposed in parallel in an extension direction of the aisle; and the first retrieving or placing mechanism is configured to retrieve or place one of the storage container and the order container, and the second retrieving or placing mechanism is configured to retrieve or place the other of the storage container and the order container.

In this way, it is convenient for the first retrieving or placing mechanism and the second retrieving or placing mechanism to perform a retrieving or placing operation on the rack respectively.

In some embodiments, the picking apparatus may further include a movable base and an apparatus body, the apparatus body is vertically disposed at the movable base, and the first retrieving or placing mechanism, the second retrieving or placing mechanism, and the picking mechanism are all connected to the apparatus body and movably disposed in a height direction of the apparatus body; and the picking mechanism is located above the first retrieving or placing mechanism and the second retrieving or placing mechanism.

In this way, efficiency of picking the storage container and the order container by the picking apparatus can be improved, and efficiency of goods picking can be improved.

In some embodiments, the picking apparatus may further include a detection mechanism, the detection mechanism is disposed in a height direction of the apparatus body in a lifting or lowing manner, and the detection mechanism is configured to identify information about goods in the storage container on the first retrieving or placing mechanism.

In this way, accuracy of picking the goods in the storage container can be improved.

In some embodiments, the rack may include a storage plate, a temporary storage plate, and a plurality of columns, the storage plate is connected to the columns to form the warehousing layer, and the temporary storage plate is connected to the columns to form the temporary storage layer.

One end of the temporary storage plate facing the first movement channel has an avoidance notch, the carrying apparatus includes a lifting mechanism, and at least part of the lifting mechanism is capable of passing through the avoidance notch from an area below the temporary storage plate and lifting the order container.

In this way, when the carrying apparatus takes out and places the order container, interference between the carrying apparatus and the temporary storage plate can be avoided.

In some embodiments, the first movement channel is located below the storage plate; and a height of the first movement channel is greater than or equal to a height of the carrying apparatus when being loaded with the order container.

In this way, it can be ensured that the carrying apparatus smoothly moves in the first movement channel when the carrying apparatus is loaded with the order container.

In some embodiments, the rack has a second movement channel, and the second movement channel may be located below the temporary storage plate; and a height of the second movement channel may be greater than or equal to a height of the carrying apparatus in a no-load state.

In this way, the carrying apparatus in the no-load state can be made to have an independent movement channel, thereby simplifying difficulty of path planning when the carrying apparatus moves, and improving logistics efficiency.

In some embodiments, the temporary storage layer has a plurality of temporary storage locations in a length direction of the rack, there is a third movement channel between at least some adjacent temporary storage locations, and the third movement channel communicates the first movement channel with the aisle.

In this way, the carrying apparatus can be enabled to traverse the aisle and move between the different racks, thereby improving diversity of movement paths of the carrying apparatus.

In some embodiments, the logistics system may further include a packing apparatus, where the packing apparatus is located at a periphery of the warehousing apparatus, and the packing apparatus is configured to pack the goods; and the carrying apparatus is configured to transport the order container between the temporary storage layer and the packing apparatus.

In this way, the order container for which order picking has been completed can be directly transported by the carrying apparatus from the rack to the packing apparatus for packing, thereby improving efficiency of the logistics system.

In some embodiments, the packing apparatus may include a packing platform and a buffer mechanism, and the packing platform is opposite to the buffer mechanism; and the carrying apparatus is capable of being docked with the buffer mechanism, where the carrying apparatus is capable of taking out the vacant order container from the buffer mechanism, or the carrying apparatus is capable of placing the order container loaded with the picked goods into the buffer mechanism.

In this way, after the goods in the order container are taken out and packed, the carrying apparatus can transport the vacant order container back on return trip, thereby improving the efficiency of the logistics system.

According to a second aspect, this application provides a logistics system control method. The method includes:
determining, by a picking apparatus of a logistics system, a target storage location on a rack based on order information, where the target storage location includes a target warehousing layer storage location at which a storage container for storing target goods is located, and a target temporary storage layer storage location at which a vacant order container is located;
retrieving, by a retrieving or placing mechanism of the picking apparatus, the storage container from the target warehousing layer storage location and the order container from the target temporary storage layer storage location, and placing the storage container and the order container to two bearing locations respectively;
picking, by a picking mechanism of the picking apparatus, the target goods in the storage container into the order container;
placing, by the retrieving or placing mechanism of the picking apparatus, the order container loaded with the target goods at a temporary storage layer; and
taking out, by a carrying apparatus of the logistics system, the order container loaded with the target goods from the temporary storage layer, and moving out of the rack through the first movement channel.

In some embodiments, the picking, by a picking mechanism of the picking apparatus, the target goods in the storage container into the order container specifically includes:
acquiring, by a detection mechanism of the picking apparatus, information about goods in the storage container; and
determining, by the picking mechanism of the picking apparatus, a position of the target goods in the storage container based on the information about goods, and taking out the target goods from the storage container and placing the target goods into the order container.

In some embodiments, before the taking out, by the picking mechanism of the picking apparatus, the target goods from the storage container, the method further includes:
determining, by the detection mechanism, whether the target goods are pickable by the picking mechanism; and
taking out, by the picking mechanism, all goods in the storage container from the storage container and placing the all goods into the order container if the target goods are not pickable.

In some embodiments, after the taking out, by a carrying apparatus of the logistics system, the order container loaded with the target goods from the temporary storage layer, the method further includes:
transferring, by the carrying apparatus, the order container loaded with the target goods to a packing apparatus, to cause the packing apparatus to take out the target goods from the order container; and
transporting, by the carrying apparatus, the vacant order container to the temporary storage layer of the rack.

According to a third aspect, this application provides a storage medium. The storage medium stores computer executable instructions, and the computer executable instructions, when executed, are used for performing the logistics system control method in above technical solutions.

This application provides a logistics system, a logistics system control method, and a storage medium. The logistics system includes a warehousing apparatus, a picking apparatus, and a carrying apparatus. The warehousing apparatus includes a plurality of racks disposed at intervals, there is an aisle between adjacent racks, each rack includes at least one warehousing layer and at least one temporary storage layer, the warehousing layer is configured to place a storage container, and the temporary storage layer is configured to place an order container. The picking apparatus is configured to move along the aisle, the picking apparatus includes a retrieving or placing mechanism and a picking mechanism, the retrieving or placing mechanism is configured to retrieve or place any one of the storage container and the order container, the retrieving or placing mechanism has at least two bearing locations, the at least two bearing locations are respectively used for bearing the storage container and the order container, and the picking mechanism is configured to pick goods in the storage container at a bearing location into the order container. The rack has a first movement channel for movement of the carrying apparatus, and the carrying apparatus is configured to take out a post-picking order container from the temporary storage layer or place a vacant order container at the temporary storage layer, so that a large picking mechanism does not need to drive out of an aisle, to reduce area occupation of space outside the rack, improve space utilization, and avoid apparatus congestion

In addition to the technical problem resolved by the embodiments of this application, the technical features constituting the technical solutions, and beneficial effects brought by the technical features of the technical solutions described above, other technical problems that can be resolved by the logistics system, the logistics system control method, and the storage medium provided in this application, other technical features included in the technical solutions, and the beneficial effects brought by the technical features are further described in detail in the detailed description.

### BRIEF DESCRIPTION OF DRAWINGS

To illustrate the technical solutions in the embodiments of this application or in prior art more clearly, accompanying drawings required for describing the embodiments or the prior art will be introduced briefly in the following. It is apparent that, the accompanying drawings in the following description are some embodiments of this application, and those of ordinary skill in the art can also derive other accompanying drawings from these accompanying drawings without creative efforts.
FIG. 1 is a first schematic structural diagram of a logistics system according to an embodiment of this application;
FIG. 2 is a second schematic structural diagram of a logistics system according to an embodiment of this application;
FIG. 3 is a schematic structural diagram of a picking apparatus in a logistics system according to an embodiment of this application;
FIG. 4 is a schematic structural diagram of a carrying apparatus in a logistics system according to an embodiment of this application;
FIG. 5 is a schematic diagram of a movement area of a carrying apparatus in a logistics system according to an embodiment of this application;
FIG. 6 is a flowchart of a logistics system control method according to an embodiment of this application; and
FIG. 7 is a flowchart of another logistics system control method according to an embodiment of this application.

### DESCRIPTION OF THE REFERENCE SIGNS:

100: warehousing apparatus; 101: aisle; 102: first movement channel; 103: second movement channel; 104: third movement channel; 110: rack; 111: warehousing layer; 112: temporary storage layer; 113: storage plate; 114: temporary storage plate; 115: column;
200: picking apparatus; 210: retrieving or placing mechanism; 220: picking mechanism; 230: movable base; 240: apparatus body; 250: detection mechanism;
300: carrying apparatus; 310: lifting mechanism;
410: storage container; 420: order container;
500: packing apparatus; 510: packing platform; and 520: buffer mechanism.

### DETAILED DESCRIPTION

To make the objectives, technical solutions, and advantages of the embodiments of this application clearer, the technical solutions in the embodiments of this application will be described clearly and completely below with reference to the accompanying drawings in the embodiments of this application. It is apparent that, the described embodiments are some of the embodiments of this application rather than all of the embodiments. All other embodiments obtained by a person of ordinary skill in the art based on the embodiments of this application without making creative efforts shall fall within the protection scope of this application.

First, a person skilled in the art should understand that the implementations are merely used for explaining the technical principles of this application, and are not intended to limit the protection scope of this application. A person skilled in the art may adjust the implementations as desired, so as to adapt to a specific application.

Secondly, it should be noted that, in the description of this application, terms such as "upper", "lower", "left", "right", "front", "back", "inner", and "outer" that indicate directions or position relationships are based on directions or position relationships shown in the accompanying drawings. This is merely for ease of description, and does not indicate or imply that an apparatus or member needs to have a specific orientation, and is constructed and operated in a specific orientation. Therefore, this should not be understood as a limitation to this application.

In addition, it should be further noted that, in the description of this application, unless explicitly specified and limited otherwise, the terms "connected" and "connect" should be understood in a broad sense, for example, may be a fixed connection, a detachable connection, or an integral connection; the connection may be a mechanical connection or an electrical connection; or the connection may be an internal communication between two members A person skilled in the art may understand specific meanings of the foregoing terms in this application according to specific situations.

In the description of this specification, the description of the reference terms such as "an embodiment", "some embodiments", "exemplary embodiments", "example", "specific example", or "some examples" means that the specific features, structures, materials or characteristics described with reference to the embodiment or example are included in at least one embodiment or example of the present disclosure. In this specification, exemplary descriptions of the foregoing terms do not necessarily refer to the same embodiment or example. In addition, the described specific features, structures, materials, or characteristics may be combined in a proper manner in any one or more of the embodiments or examples.

A three-dimensional warehouse, because of a large storage capacity thereof, is widely applied to the field of warehousing logistics of the three-dimensional warehouse. The three-dimensional warehouse usually consists of a plurality of racks, and a robot configured to retrieve or place goods can move between the racks. During goods outbound, the robot usually takes out a material container loaded with the goods from a corresponding storage location, and transports the material container along a preset track path to a sorting workbench for sorting, and the sorted goods are packed for outbound.

However, a current robot for retrieving or placing goods occupies large space when moving, resulting in low space utilization in logistics warehouses. In addition, the retrieving or placing robot needs to retrieve or place different material containers onto a sorting table according to an order requirement. A transportation process of each order needs multiple round trips. Therefore, ineffective transportation actions are excessive, and outbound logistics efficiency is low. If a plurality of retrieving or placing robots are provided to perform a goods outbound operation, the cost of the logistics system will increase. During operation, multivehicle interaction needs to be performed, and consequently congestion is prone to occur. In addition, a retrieving or placing robot further needs to acquire a vacant material container from a particular area during transportation, resulting in low box feeding efficiency of the vacant material container.

In view of the foregoing problems, embodiments of this application provide a logistics system, a logistics system control method, and a storage medium. This logistics system eliminates an independent sorting platform outside a warehousing area. A picking apparatus is disposed, the picking apparatus has functions of both retrieving or placing a material container and picking goods, and an area for placing a goods storage container and an order container is disposed on a rack. An independent carrying apparatus is used to transport the order container. In this way, the picking apparatus does not need to drive out of an aisle between the racks. This improves logistics outbound efficiency, reduces occupation of space outside the warehousing area, and improves smoothness of goods outbound transportation.

For ease of understanding, an application scenario to which the embodiments of this application are applicable is illustrated below.

The logistics system provided in this embodiment of this application may be applied to different fields such as the outbound and inbound of stock products in the manufacturing factory, and the outbound and inbound of stock products in the retail industry, or may be applied to different fields such as express outbound and inbound sorting of e-commerce logistics. A product related to transportation and outbound and inbound may be an industrial part, an electronic accessory or product, medicine, a clothing accessory, food, a book, or the like. The goods in this application may be the foregoing listed product, or may be a material container, a tray, or the like loaded with the foregoing product. This is not specifically limited in this embodiment of this application.

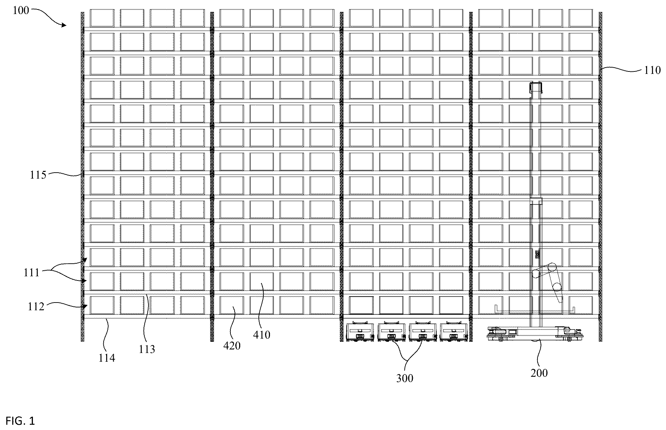

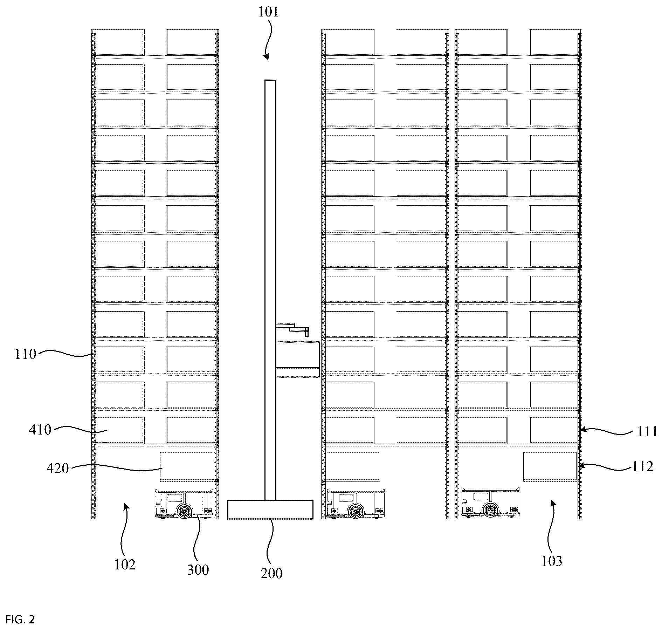

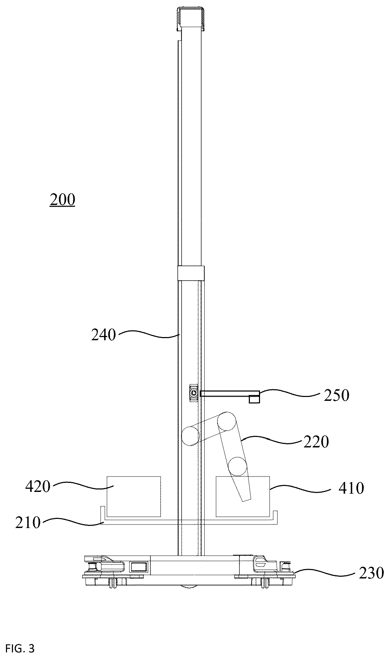

FIG. 1 is a first schematic structural diagram of a logistics system according to an embodiment of this application. FIG. 2 is a second schematic structural diagram of a logistics system according to an embodiment of this application. FIG. 3 is a schematic structural diagram of a picking apparatus in a logistics system according to an embodiment of this application.

Referring to FIG. 1 to FIG. 3, this application provides a logistics system. The logistics system includes a warehousing apparatus 100, a picking apparatus 200, and a carrying apparatus 300. The warehousing apparatus 100 includes a plurality of racks 110 disposed at intervals. There is an aisle 101 between adjacent racks 110. Each rack 110 includes at least one warehousing layer 111 and at least one temporary storage layer 112. A material container includes a storage container 410 and an order container 420. The warehousing layer 111 is configured to place the storage container 410, and goods entering a warehouse are stored in the storage container 410. The temporary storage layer 112 is configured to place the order container 420. When goods outbound needs to be performed, the goods are picked and placed into the order container 420, and the goods required in an order are transported by the order container 420.

The plurality of racks 110 form a warehousing area. The picking apparatus 200 is configured to move along the aisle 101. In other words, the picking apparatus 200 moves in the warehousing area. The picking apparatus 200 is configured to retrieve or place the material container including the storage container 410 and the order container 420 from the rack 110. Moreover, during goods outbound, the picking apparatus 200 can take out the storage container 410 and the order container 420 according to an order requirement, and retrieve or place target goods in an order from the storage container 410 into the order container 420. In other words, the picking apparatus 200 can complete goods picking work in the aisle 101.

The carrying apparatus 300 is configured to transport the order container 420, including: retrieving and transporting the order container 420, for which picking has been completed by the picking apparatus 200, from the temporary storage layer 112 to a next outbound procedure; or transporting a vacant order container 420 to the temporary storage layer 112. It may be understood that, the picking apparatus 200 needs to retrieve or place a material container at any storage location on the entire rack 110 and needs to complete a goods picking operation, while the carrying apparatus 300 only needs to retrieve, place and transport a particular order container 420, and therefore, the carrying apparatus 300 has a smaller volume and is more flexible compared with the picking apparatus 200. Thus, when the carrying apparatus 300 moves, a movement track of the carrying apparatus 300 may occupy smaller space, thereby improving space utilization of the entire logistics system.

In some embodiments, the picking apparatus 200 includes a retrieving or placing mechanism 210 and a picking mechanism 220. The retrieving or placing mechanism 210 is configured to retrieve or place any one of the storage container 410 and the order container 420. The retrieving or placing mechanism 210 has at least two bearing locations, and the at least two bearing locations are respectively used for bearing the storage container 410 and the order container 420. The picking mechanism 220 is configured to pick goods in the storage container 410 at the bearing location into the order container 420.

It may be understood that, the retrieving or placing mechanism 210 may include a first retrieving or placing mechanism and a second retrieving or placing mechanism that are independent of each other and can perform independent retrieving or placing operations. The picking apparatus 200 can first acquire the storage container 410 through the first retrieving or placing mechanism and then acquire the order container 420 through the second retrieving or placing mechanism, or first acquire the order container 420 through the second retrieving or placing mechanism and then acquire the storage container 410 through the first retrieving or placing mechanism. Then, the picking mechanism 220 performs a sorting operation on the storage container 410 and the order container 420 that are located on the picking apparatus 200, corresponding order target goods in the storage container 410 are sorted into the order container 420.

In addition, the rack 110 has a first movement channel 102 for movement of the carrying apparatus 300. The carrying apparatus 300 is configured to take out a post-picking order container 420 from the temporary storage layer 112 or place a vacant order container 420 at the temporary storage layer 112. In this way, when the carrying apparatus 300 moves in the warehousing area of the rack 110, space occupied by the rack 110 may be used. There is no need to dispose a separate passage between the racks 110 for the movement of the carrying apparatus 300, nor is it necessary to occupy the aisle 101 for movement of the picking apparatus 200, thereby improving efficiency of inbound and outbound of the order container 420 of the carrying apparatus 300, while improving warehousing density in the warehousing area of the rack 110.

It should be noted that, in the logistics system provided in this embodiment of this application, the picking apparatus 200 and the carrying apparatus 300 can cooperate to work, the picking apparatus 200 retrieves and places the storage container 410 and the order container 420 on the rack 110 and completes a goods picking operation, and the carrying apparatus 300 is used to transport a post-picking order container 420. In this way, a large picking mechanism 220 does not need to drive out of the aisle 101, thereby reducing area occupation of space outside the rack 110, improving space utilization, and avoiding apparatus congestion.

A distribution manner of the warehousing layer 111 and the temporary storage layer 112 on the rack 110 is first illustrated in detail below.

Still referring to FIG. 1 to FIG. 3, in some embodiments, the warehousing layer 111 and the temporary storage layer 112 may be arranged along a height direction of the rack 110. The temporary storage layer 112 is located at the bottom of the rack 110, and the first movement channel 102 is located on a side of the temporary storage layer 112. In this way, space under the rack 110 can be fully used, so that the carrying apparatus 300 does not need to occupy space of the aisle 101 when moving, thereby improving convenience of inbound and outbound of the order container 420.

It may be understood that, there may be a plurality of warehousing layers 111, and thereby may be a plurality of temporary storage layers 112. Because the temporary storage layer 112 only needs to store the order container 420 temporarily, and the warehousing layer 111 plays a role in storing goods on the rack 110, the number of warehousing layers 111 may be greater than the number of the temporary storage layers 112 on each rack 110.

Using an example in which one temporary storage layer 112 is disposed, the temporary storage layer 112 is located at the lowest layer of the rack 110, and a storage location depth of the warehousing layer 111 matches a width of the rack 110, to fully use storage space of the rack 110. A storage location depth of the temporary storage layer 112 may be less than the width of the rack 110, or a storage location depth of the temporary storage layer 112 may be less than the storage location depth of the warehousing layer 111, to reserve space on the side of the temporary storage layer 112 for forming the first movement channel 102, so as to facilitate movement of the carrying apparatus 300 at the bottom of the rack 110.

For example, the width of the rack 110 is approximately a length of two material containers, or is slightly greater than a length of two material containers. Each storage location of the warehousing layer 111 can store two material containers, and each storage location of the temporary storage layer 112 can store one material container, so that space with a length of at least one material container can be reserved on the side of the temporary storage layer 112 at the bottom of the rack 110 to form the first movement channel 102.

In some embodiments, the temporary storage layer 112 has a first retrieving or placing opening and a second retrieving or placing opening. The first retrieving or placing opening may face the aisle 101, and the picking apparatus 200 is configured to retrieve or place the order container 420 from the first retrieving or placing opening. The second retrieving or placing opening may face the first movement channel 102, and the carrying apparatus 300 is configured to retrieve or place the order container 420 from the second retrieving or placing opening.

It may be understood that, when the plurality of racks 110 are arranged, two racks 110 may be grouped together, and every two racks 110 form a rack group. Two racks 110 in each group may be docked, and the two racks 110 may be symmetrically arranged. Temporary storage layers 112 of the two racks 110 may be respectively located on two sides of the rack group, while first movement channels 102 of the two racks 110 may be disposed adjacently and located in the middle of the rack group. In this way, the first retrieving or placing opening and the second retrieving or placing opening of the temporary storage layer 112 may be located at two ends of the storage location of the temporary storage layer. The carrying apparatus 300 and the picking apparatus 200 can retrieve or place the order container 420 from two ends of the temporary storage layer 112 according to respective tasks, without mutual interference, thereby improving efficiency of inbound and outbound of the order container 420.

It should be noted that, for a same rack group, first movement channels 102 of two racks 110 may form a larger movement channel, so that the carrying apparatus 300 may perform a retrieving or placing operation on order containers 420 on temporary storage layers 112 on two sides of the rack group.

A specific structure of the picking apparatus 200 is illustrated in detail below.

Refer to FIG. 3. With reference to FIG. 1 and FIG. 2, in some embodiments, the first retrieving or placing mechanism and the second retrieving or placing mechanism may be disposed in parallel in an extension direction of the aisle 101, so that the first retrieving or placing mechanism and the second retrieving or placing mechanism separately perform a retrieving or placing operation on the rack 110.

Picking areas of the first retrieving or placing mechanism and the second retrieving or placing mechanism may face a same direction. When the sorting apparatus faces the rack 110, both the picking areas of the first retrieving or placing mechanism and the second retrieving or placing mechanism may face the rack 110.

For example, the first retrieving or placing mechanism may include a fixed pallet and a telescopic arm. The fixed pallet may be configured to bear the storage container 410, and the telescopic arm is disposed to be movable relative to the fixed pallet. A picking piece may be disposed at one end of the telescopic arm facing the rack 110, and the picking piece is configured to cooperate with the storage container 410 to remove the storage container 410 or push the storage container to a storage location in a warehousing layer 111. The picking piece may use, including but not limited to, a suction cup, a hook, a robotic hand, and the like. The telescopic arm may extend toward the rack 110 relative to the fixed pallet or retract relative to the fixed pallet. A drive unit such as a motor may be disposed on the fixed pallet or the telescopic arm. The telescopic arm may be slidably connected to a side edge of the fixed pallet through a guide rail slider. The drive unit may drive the telescopic arm to move relative to the fixed pallet through gear and rack structures or a pulley structure. This is not specifically limited in this embodiment of this application.

It should be noted that, the second retrieving or placing mechanism may be of a structure similar to or the same as that of the first retrieving or placing mechanism, to implement a retrieving or placing operation on the order container 420. Details are not described herein again.

Refer to FIG. 3. With reference to FIG. 1 and FIG. 2, in some embodiments, the picking apparatus 200 may further include a movable base 230 and an apparatus body 240. The apparatus body 240 is vertically disposed at the movable base 230. The first retrieving or placing mechanism, the second retrieving or placing mechanism, and the picking mechanism 220 are all connected to the apparatus body 240, and are movably disposed in a height direction of the apparatus body 240.

It may be understood that, the movable base 230 moves in the aisle 101, and the first retrieving or placing mechanism and the second retrieving or placing mechanism move up and down in a vertical direction relative to the apparatus body 240, so that the first retrieving or placing mechanism may be moved to be opposite to a storage location at which a target storage container 410 is placed, or the second retrieving or placing mechanism may be moved to be opposite to a target storage location of the temporary storage layer 112.

The picking mechanism 220 may be located above the first retrieving or placing mechanism and the second retrieving or placing mechanism. The first retrieving or placing mechanism and the second retrieving or placing mechanism are arranged in parallel in a horizontal direction, so that an opening of the storage container 410 located at the first retrieving or placing mechanism faces upward, and an opening of the order container 420 located at the second retrieving or placing mechanism faces upward. When located above, the picking mechanism 220 facilitates to perform a picking operation, thereby improving efficiency of picking the storage container 410 and the order container 420 by the picking apparatus 200, and improving goods picking efficiency.

For example, the picking mechanism 220 may be a multi-joint robotic arm. The picking mechanism 220 can move up and down in a vertical direction relative to the first retrieving or placing mechanism and the second retrieving or placing mechanism. The picking mechanism 220 may include a first joint and a second joint. The first joint can rotate in a horizontal plane relative to the apparatus body 240, and the second joint can rotate in a horizontal plane relative to the first joint. A grasping piece for retrieving or placing goods may be disposed at an end of the second joint. The grasping piece may include, but is not limited to, a suction cup, a clamping plate, a robotic hand, and the like. This is not specifically limited in this embodiment of this application.

In some embodiments, the picking apparatus 200 may further include a detection mechanism 250. The detection mechanism 250 is disposed in a height direction of the apparatus body 240 in a lifting or lowing manner. The detection mechanism 250 is configured to identify information about goods in the storage container 410 on the first retrieving or placing mechanism, to improve accuracy of picking the goods in the storage container 410.

It may be understood that, the detection mechanism 250 may be disposed above the picking mechanism 220, and the detection mechanism 250 may be opposite to the first retrieving or placing mechanism.

For example, the detection mechanism 250 may include, but is not limited to, a 3D camera, radar, a code reader, a laser sensor, and the like. The detection mechanism 250 may include one or more of the foregoing sensing units. This is not specifically limited in this embodiment of this application.

It should be noted that, the apparatus body 240 may be of a vertical rod-like structure, or may have a door frame structure. The apparatus body 240 may be provided with a lifting unit. The lifting unit drives a gear and a rack or a synchronous belt through a motor to implement vertical movement along the apparatus body 240. The first retrieving or placing mechanism, the second retrieving or placing mechanism, and the picking mechanism 220 can all implement lift motion relative to the apparatus body 240 through the lifting unit.

A specific structure of the rack 110 and a specific retrieving or placing manner of the carrying apparatus 300 are illustrated in detail below.

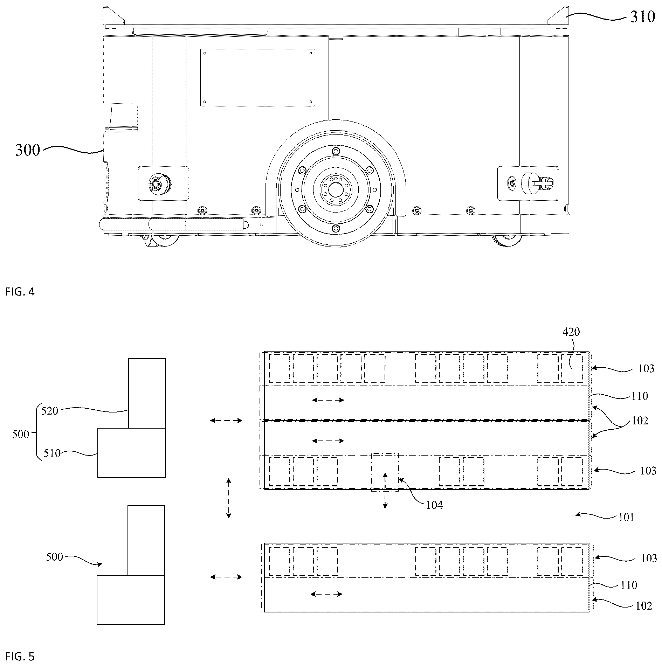

FIG. 4 is a schematic structural diagram of a carrying apparatus in a logistics system according to an embodiment of this application. FIG. 5 is a schematic diagram of a movement area of a carrying apparatus in a logistics system according to an embodiment of this application.

Referring to FIG. 1 to FIG. 5, in some embodiments, the rack 110 may include a storage plate 113, a temporary storage plate 114, and a plurality of columns 115. The storage plate 113 is connected to the columns 115 to form the warehousing layer 111. The temporary storage plate 114 is connected to the columns 115 to form the temporary storage layer 112. Two adjacent columns 115 may be connected to each other through a cross beam, and both the storage plate 113 and the temporary storage plate 114 may be horizontally disposed.

One end of the temporary storage plate 114 facing the first movement channel 102 has an avoidance notch. The carrying apparatus 300 includes a lifting mechanism 310. At least part of the lifting mechanism 310 may pass through the avoidance notch from an area below the temporary storage plate 114 and lift the order container 420. When the carrying apparatus 300 retrieves or places the order container 420, interference between the carrying apparatus 300 and the temporary storage plate 114 can be avoided.

It may be understood that, the carrying apparatus 300 may include a mobile chassis and a tray disposed above the mobile chassis. The tray may be provided with a telescopic protrusion structure. When the carrying apparatus 300 is located below the temporary storage plate 114, the protrusion structure may lift the order container 420. When the carrying apparatus 300 is moved from an area below the temporary storage plate 114 into the first movement channel 102, the protrusion structure may retract, so that the order container 420 falls onto the tray. Certainly, the carrying apparatus 300 may alternatively be of another structure for retrieving or placing the order container 420, including but not limited to a telescopic arm and the like. This is not specifically limited in this embodiment of this application, and details are not described herein again.

The warehousing layer 111 is located above the first movement channel 102 and the temporary storage layer 112, and the first movement channel 102 may be located below the storage plate 113. To ensure that the carrying apparatus 300 smoothly moves in the first movement channel 102 when the carrying apparatus is loaded with the order container 420, a height of the first movement channel 102 is greater than or equal to a height of the carrying apparatus 300 when being loaded with the order container 420.

In addition, the rack 110 has a second movement channel 103, the second movement channel 103 may be located below the temporary storage plate 114, and a height of the second movement channel 103 may be greater than or equal to a height of the carrying apparatus 300 in a no-load state, so that the carrying apparatus 300 in the no-load state can be allowed to have an independent movement channel, thereby simplifying difficulty in planning a path when the carrying apparatus 300 moves, and improving logistics efficiency.

There are a plurality of racks 110 in the logistics system, and different racks 110 may be spaced by aisles 101. To facilitate the carrying apparatus 300 to traverse the aisle 101, the temporary storage layer 112 has a plurality of temporary storage locations in a length direction of the racks 110, there is a third movement channel 104 between least some adjacent temporary storage locations, and the third movement channel 104 communicates the first movement channel 102 with the aisle 101, so that the carrying apparatus 300 can move between different racks 110, thereby improving diversity of a movement path of the carrying apparatus 300.

Still refer to FIG. 5. With reference to FIG. 1 and FIG. 2, in some embodiments, the logistics system may further include a packing apparatus 500. The packing apparatus 500 is located at a periphery of the warehousing apparatus 100. The packing apparatus 500 is configured to pack the goods. The carrying apparatus 300 is configured to transport the order container 420 between the temporary storage layer 112 and the packing apparatus 500, so that the order container 420 for which order picking has been completed can be directly transported by the carrying apparatus 300 from the rack 110 to the packing apparatus 500 for packing, thereby improving efficiency of the logistics system.

It may be understood that, the packing apparatus 500 may include a packing platform 510 and a buffer mechanism 520. The packing platform 510 is opposite to the buffer mechanism 520. The carrying apparatus 300 may be docked with the buffer mechanism 520. The carrying apparatus 300 can take out the vacant order container 420 from the buffer mechanism 520. Alternatively, the carrying apparatus 300 may place the order container 420 loaded with the picked goods into the buffer mechanism 520. After the goods in the order container 420 are taken out and packed, the carrying apparatus 300 can transport the vacant order container 420 back on return trip, thereby improving the efficiency of the logistics system.

For example, the packing platform 510 can pack the order goods by using a packing robot, or the packing platform 510 can manually pack the order goods. This is not specifically limited in this embodiment of this application. In addition, the packing platform 510 and the buffer mechanism 520 may be connected through automatic equipment such as a conveyor. The vacant order container 420 may be automatically conveyed to the buffer mechanism 520. Alternatively, when orders of the packing platform 510 are congested, some of order containers 420 that have not been processed may be temporarily stored by the buffer mechanism 520.

It should be noted that, space between the packing apparatus 500 and the rack 110 only needs to be reserved for movement of the carrying apparatus 300. Because the carrying apparatus 300 has a small volume, space occupation from the periphery of the rack 110 to the packing apparatus 500 can be effectively reduced, thereby improving space utilization and simplifying a movement path of the carrying apparatus 300.

This application further provides a logistics system control method. The method is applied to the logistics system in the foregoing technical solutions. The logistics system control method may have all technical effects of the foregoing logistics system, and details are not described herein again. The logistics system control method is illustrated in detail below.

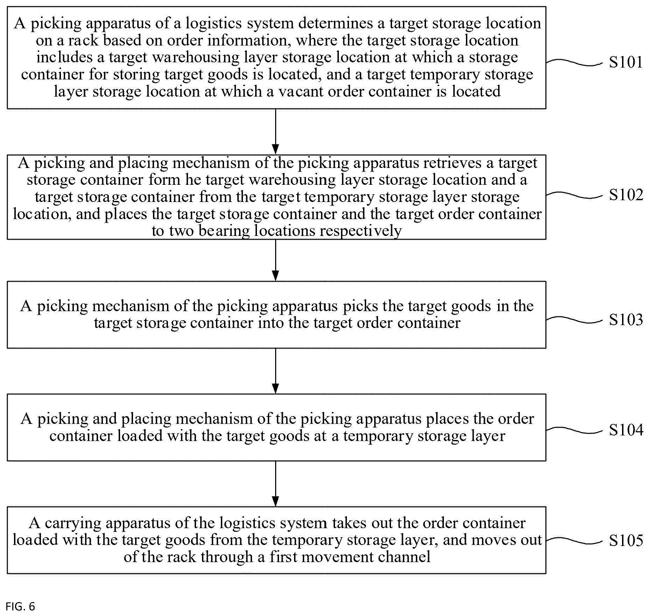

FIG. 6 is a flowchart of a logistics system control method according to an embodiment of this application.

Refer to FIG. 6. With reference to FIG. 1 to FIG. 5, in some embodiments, this application provides a first logistics system control method. The method includes that:
S101: A picking apparatus 200 of a logistics system determines a target storage location on a rack 110 based on order information, where the target storage location includes a target warehousing layer storage location at which a storage container 410 for storing target goods is located, and a target temporary storage layer storage location at which a vacant order container 420 is located.

It may be understood that the logistics system may have a control center. The control center can monitor information about goods on the rack 110, publish an order task, and schedule movement of the picking apparatus 200 and the carrying apparatus 300.

After an order task is received, a position of a storage location at which target goods is located may be confirmed based on order content, and a storage location at which a vacant order container 420 in a corresponding rack 110 is located is determined, so as to confirm a target storage location. Each order may include one or more products. A plurality of products may be located at a same storage location, or may be located at different storage locations. Moreover, the plurality of products may be located on a same rack 110, or may be located on different racks 110.

S102: A retrieving or placing mechanism 210 of the picking apparatus 200 retrieves a target storage container 410 from the target warehousing layer storage location and a target order container 420 from the target temporary storage layer storage location , and places the target storage container 410 and the target order container 420 to two bearing locations respectively.

The control center may indicate one or more picking apparatuses 200 to perform retrieving and picking work of corresponding order goods. The picking apparatuses 200 may move in the aisle 101 and acquires a vacant order container 420 from the temporary storage layer 112 first. Then, based on the position of the storage location at which the target goods are located, the picking apparatuses sequentially takes out storage containers 410 at different storage locations of the warehousing layers 111 in order of distance and picks the target goods.

S103: A picking mechanism 220 of the picking apparatus 200 picks the target goods in the target storage container 410 into the target order container 420.

The picking the target goods in the storage container 410 into the order container 420 may specifically include the following steps.

Step 1: A detection mechanism 250 of the picking apparatus 200 acquires information about goods in the storage container 410, and determines a position of the target goods in the storage container 410 based on the information about goods.

It may be understood that, the picking apparatus 200 can identify the goods in the storage container 410 through the detection mechanism 250, which includes but is not limited to machine vision identification such as a 3D camera, two-dimensional barcode identification, barcode identification, and the like, so as to accurately determine the position of the target goods in the storage container 410.

Step 2: The picking mechanism 220 of the picking apparatus 200 picks the target goods from the storage container 410 and places the target goods into the order container 420.

It may be understood that the picking mechanism 220 may be a robotic arm on the picking apparatus 200. The picking mechanism 220 may transfer the target goods from the storage container 410 to the order container 420 in a manner such as suction by a suction cup, clamping by clamping plates, or grasping by a robotic hand.

It should be noted that, after acquiring target goods in the order is completed, the picking apparatus 200 may place the storage container 410 at the storage location of the rack 110 at which the storage container 410 was originally stored, acquire a storage container 410 of next target goods, and repeat the foregoing picking step.

In some embodiments, before the picking mechanism 220 of the picking apparatus 200 picks the target goods from the storage container 410 and places the target goods into the order container 420, the method may further include:

The detection mechanism 250 determines whether the target goods are pickable by the picking mechanism 220. If the target goods are not pickable, the picking mechanism 220 picks all goods in the storage container 410 into the order container 420. For example, the target goods and other goods are in a same complete package and cannot be separately acquired. In this way, when goods are not pickable, the goods in the storage container 410 may be transferred to the order container 420, and manually sorted by performing a separate special procedure during subsequent outbound.

If the target goods are pickable and acquirable, the foregoing picking operation may be performed. Details are not described herein again.

S104: The retrieving or placing mechanism of the picking apparatus 200 places the order container 420 loaded with the target goods at a temporary storage layer 112.

It may be understood that, after all goods in the order are picked, or a current order container 420 is full, the picking apparatus 200 can place this order container 420 at the temporary storage layer 112. The picking apparatus 200 can place, based on a control status of the temporary storage layer 112 fed back by a control center, the order container 420 at a closest vacant storage location of the temporary storage layer 112.

It should be noted that, after the picking apparatus 200 places the order container 420 at the temporary storage layer 112, the picking apparatus 200 may directly perform an acquiring and picking operation of a next order.

S105: A carrying apparatus 300 of the logistics system takes out the order container 420 loaded with the target goods from the temporary storage layer 112, and moves out of the rack 110 through the first movement channel 102.

After completing order picking, and placing, at the temporary storage layer 112, the order container 420 in which a picked order goods is placed, the picking apparatus 200 may feed back information to the control center. The control center can allocate, to the carrying apparatus 300, a task of transporting the order container 420, for example, selecting a carrying apparatus 300 that is in an idle state and that is closest to this target order container 420. The carrying apparatus 300 takes out the target order container 420 from the temporary storage layer 112 and transports the target order container to a next outbound procedure.

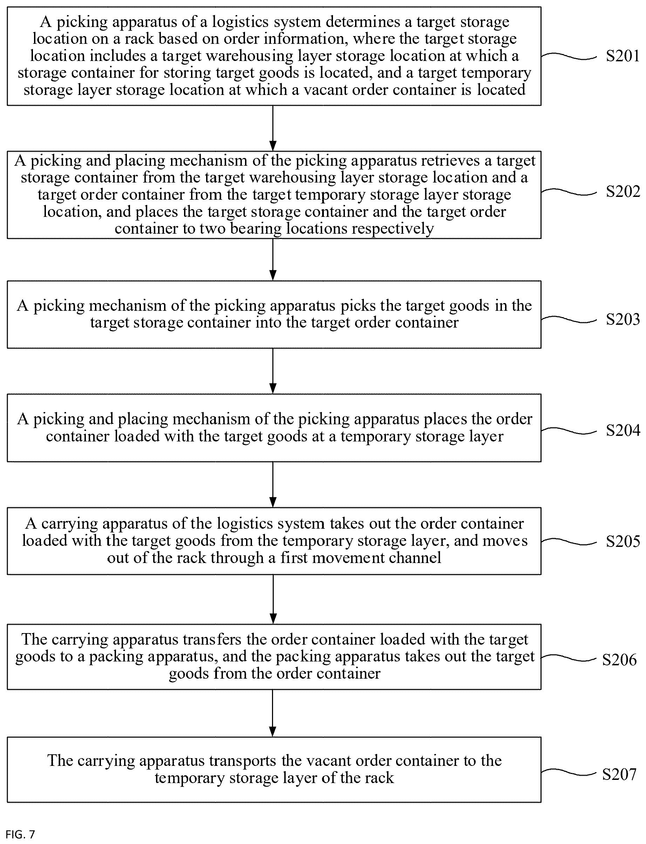

FIG. 7 is a flowchart of another logistics system control method according to an embodiment of this application.

Refer to FIG. 7. With reference to FIG. 1 to FIG. 5, in some embodiments, this application further provides a second logistics system control method. The method includes that:

S201: A picking apparatus 200 of a logistics system determines a target storage location on a rack 110 based on order information, where the target storage location includes a target warehousing layer storage location at which a storage container 410 for storing target goods is located, and a target temporary storage layer storage location at which a vacant order container 420 is located.

It should be noted that, for a process of performing S201, refer to a process of performing S101, and details are not described herein again.

S202: A retrieving or placing mechanism 210 of the picking apparatus 200 retrieves the storage container from the target warehousing layer storage location and the order container from the target temporary storage layer storage locationand places the target storage container 410 and the target order container 420 to two bearing locations respectively.

It should be noted that, for a process of performing S202, refer to a process of performing S102, and details are not described herein again.

S203: A picking mechanism 220 of the picking apparatus 200 picks the target goods in the target storage container 410 into the target order container 420.

It should be noted that, for a process of performing S203, refer to a process of performing S103, and details are not described herein again.

S204: The retrieving or placing mechanism 210 of the picking apparatus 200 places the order container 420 loaded with the target goods at a temporary storage layer 112.

It should be noted that, for a process of performing S204, refer to a process of performing S104, and details are not described herein again.

S205: A carrying apparatus 300 of the logistics system takes out the order container 420 loaded with the target goods from the temporary storage layer 112, and moves out of the rack 110 through the first movement channel 102.

It should be noted that, for a process of performing S205, refer to a process of performing S105, and details are not described herein again.

S206: The carrying apparatus 300 transfers the order container 420 loaded with the target goods to a packing apparatus 500, and the packing apparatus 500 takes out the target goods from the order container 420.

It may be understood that a plurality of packing apparatuses 500 may be disposed around an outer side of a warehousing area formed by the racks 110. The carrying apparatus 300 can transport the order containers 420 loaded with the order goods to a closest packing apparatus 500 for packing. Alternatively, the control center can acquire work statuses of all the packing apparatuses 500, determine the busyness level of each packing apparatus 500, for example, record an order queuing status of each packing apparatus 500, and indicate, according to the above statuses, the carrying apparatus 300 to transport the order container 420 loaded with the order goods to a packing apparatus 500 that has the least order queuing.

In addition, if the busyness level of the plurality of packing apparatuses 500 are the same, the carrying apparatus 300 is indicated to transport the order container 420 loaded with the order goods to a closest packing apparatus 500 of the plurality of packing apparatuses 500 having the same busyness level.

S207: The carrying apparatus 300 transports the vacant order container 420 to the temporary storage layer 112 of the rack 110.

It may be understood that, because the packing apparatus 500 continuously performs order packing to continuously generate vacant order containers 420, the carrying apparatus 300 can transport the vacant order container 420 back from the packing apparatus 500, and transport the order container 420 to the temporary storage layer 112 of the rack 110.

For example, the carrying apparatus 300 can transport the vacant order container 420 to a closest vacant storage location of the temporary storage layer 112. Alternatively, the carrying apparatus 300 can transport the vacant order container 420 to the rack 110 with a small quantity of currently vacant order containers 420 according to an indication of the control center, to keep balance of the vacant order containers 420 on different racks 110, and maintain the continuous and stable outbound of the plurality of racks 110.

The logistics system provided in this embodiment of this application has a control center. The control center controls operation of the logistics system by sending and receiving a control instruction. An embodiment of this application provides a logistics system control method. The method uses a control center of the logistics system as an execution body, and the control center can schedule the operation of the picking apparatus and the carrying apparatus. Specific steps of the method are illustrated in detail below.

Step 1: A control center sends a picking instruction to a picking apparatus, and controls the picking apparatus to acquire a target material container.

The picking instruction includes order information, and the picking apparatus can determine a target storage location on a rack based on the order information. The target storage location includes a target warehousing layer storage location at which a storage container for storing target goods is located, and a target temporary storage layer storage location at which a vacant order container is located.

A retrieving or placing mechanism of the picking apparatus picks and places the storage container and the order container to two bearing locations from the target warehousing layer storage location and the target temporary storage layer storage location respectively.

Step 2: The control center sends a picking instruction to the picking apparatus, and controls the picking apparatus to sort goods.

A picking mechanism of the picking apparatus picks the target goods in the storage container into the order container.

Step 3: The control center sends a first outbound instruction to the picking apparatus, and controls the picking apparatus to place the order container loaded with the target goods at a temporary storage layer.

Step 4: The control center sends a second outbound instruction to a carrying apparatus, and controls the carrying apparatus to take out the order container loaded with the target goods from the temporary storage layer.

The carrying apparatus of the logistics system takes out the order container loaded with the target goods from the temporary storage layer, and moves out of the rack through the first movement channel.

An embodiment of this application further provides a storage medium. The storage medium stores computer executable instructions, and the computer executable instructions, when executed, are used for performing the logistics system control method in above technical solutions.

The storage medium may be a computer-readable storage medium, or may be a communication medium. The communication medium includes any medium that facilitates a computer program to be transferred from one place to another place. The computer-readable storage medium may be any available medium that is accessible to a general-purpose or specialpurpose computer. For example, the computer-readable storage medium is coupled to a processor, so that the processor is allowed to read information from the computer-readable storage medium and write information to the computer-readable storage medium. Certainly, the computer-readable storage medium may alternatively be an integral part of the processor. The processor and the computer-readable storage medium may be located in an Application Specific Integrated Circuit (ASIC). In addition, the ASIC may be located in user equipment. In addition, the processor and the computer-readable storage medium may alternatively exist in a communication device as discrete components.

For example, the storage medium may be implemented by any type of volatile or nonvolatile storage device or a combination thereof, such as a Static Random-Access Memory (SRAM), an Electrically-Erasable Programmable Read-Only Memory (EEPROM), an Erasable Programmable Read Only Memory (EPROM), a Programmable Read-Only Memory (PROM), a Read-Only Memory (ROM), a magnetic memory, a flash memory, a magnetic disk, or an optical disc. The storage medium may be any available medium accessible to a general-purpose or dedicated computer.

Finally, it should be noted that: the foregoing embodiments are merely used for illustrating, but are not intended to limit, the technical solutions of this application. Although this application is illustrated in detail with reference to the foregoing embodiments, a person of ordinary skill in the art should understand that: modifications may still be made to the technical solutions described in the foregoing embodiments, or equivalent replacements may be made to some or all of the technical features in the foregoing embodiments. These modifications or replacements do not cause the essence of corresponding technical solutions to depart from the scope of the technical solutions of the embodiments of this application.

## Claims

1. A logistics system, comprising: a warehousing apparatus, a picking apparatus, and a carrying apparatus, wherein the warehousing apparatus comprises a plurality of racks disposed at intervals, there is an aisle between adjacent racks, each rack comprises a warehousing layer and a temporary storage layer, the warehousing layer is configured to place a storage container, and the temporary storage layer is configured to place an order container;
wherein the picking apparatus is configured to move along the aisle, wherein the picking apparatus comprises a retrieving or placing mechanism and a picking mechanism, the retrieving or placing mechanism is configured to retrieve or place any one of the storage container and the order container, the retrieving or placing mechanism has at least two bearing locations, the at least two bearing locations are respectively configured to bear the storage container and the order container, and the picking mechanism is configured to pick goods in the storage container into the order container; and
wherein the rack has a first movement channel for movement of the carrying apparatus, and the carrying apparatus is configured to take out a post-picking order container from the temporary storage layer or place a vacant order container at the temporary storage layer.

2. The logistics system according to claim 1, wherein the warehousing layer and the temporary storage layer are arranged in a height direction of the rack, the temporary storage layer is located at the bottom of the rack, and the first movement channel is located on a side of the temporary storage layer.

3. The logistics system according to claim 1, wherein the temporary storage layer has a first retrieving or placing opening and a second retrieving or placing opening, the first retrieving or placing opening faces the aisle, and the picking apparatus is configured to retrieve or place the order container from the first retrieving or placing opening; and the second retrieving or placing opening faces the first movement channel, and the carrying apparatus is configured to retrieve or place the order container from the second retrieving or placing opening.

4. The logistics system according to any one of claims 1 to 3, wherein the retrieving or placing mechanism comprises a first retrieving or placing mechanism and a second retrieving or placing mechanism, and the first retrieving or placing mechanism and the second retrieving or placing mechanism are disposed in parallel in an extension direction of the aisle; and the first retrieving or placing mechanism is configured to retrieve or place one of the storage container and the order container, and the second retrieving or placing mechanism is configured to retrieve or place the other of the storage container and the order container.

5. The logistics system according to claim 4, wherein the picking apparatus further comprises a movable base and an apparatus body, the apparatus body is vertically disposed at the movable base, and the first retrieving or placing mechanism, the second retrieving or placing mechanism, and the picking mechanism are all connected to the apparatus body and movably disposed in a height direction of the apparatus body; and the picking mechanism is located above the first retrieving or placing mechanism and the second retrieving or placing mechanism.

6. The logistics system according to claim 5, wherein the picking apparatus further comprises a detection mechanism, the detection mechanism is disposed in a height direction of the apparatus body in a lifting or lowing manner, and the detection mechanism is configured to identify information about goods in the storage container on the first retrieving or placing mechanism.

7. The logistics system according to any one of claims 1 to 3, wherein the rack comprises a storage plate, a temporary storage plate, and a plurality of columns, the storage plate is connected to the columns to form the warehousing layer, and the temporary storage plate is connected to the columns to form the temporary storage layer; and
one end of the temporary storage plate facing the first movement channel has an avoidance notch, the carrying apparatus comprises a lifting mechanism, and at least part of the lifting mechanism is capable of passing through the avoidance notch from an area below the temporary storage plate and lifting the order container.

8. The logistics system according to claim 7, wherein the first movement channel is located below the storage plate; and a height of the first movement channel is greater than or equal to a height of the carrying apparatus when being loaded with the order container.

9. The logistics system according to claim 7, wherein the rack has a second movement channel, and the second movement channel is located below the temporary storage plate; and a height of the second movement channel is greater than or equal to a height of the carrying apparatus in a no-load state.

10. The logistics system according to any one of claims 1 to 3, wherein the temporary storage layer has a plurality of temporary storage locations in a length direction of the rack, there is a third movement channel between at least some adjacent temporary storage locations, and the third movement channel communicates the first movement channel with the aisle.

11. The logistics system according to any one of claims 1 to 3, further comprising a packing apparatus, wherein the packing apparatus is located at a periphery of the warehousing apparatus, and the packing apparatus is configured to pack the goods; and the carrying apparatus is configured to transport the order container between the temporary storage layer and the packing apparatus.

12. The logistics system according to claim 11, wherein the packing apparatus comprises a packing platform and a buffer mechanism, and the packing platform is opposite to the buffer mechanism; and the carrying apparatus is capable of being docked with the buffer mechanism, wherein the carrying apparatus is capable of taking out the vacant order container from the buffer mechanism, or the carrying apparatus is capable of placing the order container loaded with the picked goods into the buffer mechanism.

13. A logistics system control method, wherein the method comprises:
determining, by a picking apparatus of a logistics system, a target storage location on a rack based on order information, wherein the target storage location comprises a target warehousing layer storage location at which a storage container for storing target goods is located, and a target temporary storage layer storage location at which a vacant order container is located;
retrieving, by a retrieving or placing mechanism of the picking apparatus, the storage container from the target warehousing layer storage location and the order container from the target temporary storage layer storage location, and placing the storage container and the order container to two bearing locations respectively;
picking, by a picking mechanism of the picking apparatus, the target goods in the storage container into the order container;
placing, by the retrieving or placing mechanism of the picking apparatus, the order container loaded with the target goods at a temporary storage layer; and
taking out, by a carrying apparatus of the logistics system, the order container loaded with the target goods from the temporary storage layer, and moving out of the rack through a first movement channel.

14. The logistics system control method according to claim 13, wherein the picking, by the picking mechanism of the picking apparatus, the target goods in the storage container into the order container specifically comprises:
acquiring, by a detection mechanism of the picking apparatus, information about goods in the storage container; and
determining, by the picking mechanism of the picking apparatus, a position of the target goods in the storage container based on the information about goods, taking out the target goods from the storage container and placing the target goods into the order container.

15. The logistics system control method according to claim 14, wherein before the taking out, by the picking mechanism of the picking apparatus, the target goods from the storage container, the method further comprises:
determining, by the detection mechanism, whether the target goods are pickable by the picking mechanism; and
taking out, by the picking mechanism, all goods in the storage container from the storage container and placing the all goods into the order container if the target goods are not pickable.

16. The logistics system control method according to claim 13, wherein after the taking out, by a carrying apparatus of the logistics system, the order container loaded with the target goods from the temporary storage layer, the method further comprises:
transferring, by the carrying apparatus, the order container loaded with the target goods to a packing apparatus, to cause the packing apparatus to take out the target goods from the order container; and
transporting, by the carrying apparatus, the vacant order container to the temporary storage layer of the rack.

17. A storage medium, wherein the storage medium stores computer executable instructions, and the computer executable instructions, when executed, are used for performing the logistics system control method according to any one of claims 13 to 16.
